# EUROPÄISCHE PATENTANMELDUNG

(11) **EP 2 498 357 A1**
(43) Veröffentlichungstag der Anmeldung: **12.09.2012**
(21) Anmeldenummer: 11157193.1
(22) Anmeldetag: 07.03.2011
(51) Int. Cl.: H02G 3/14, F16B 21/07

(54) **Befestigungsmittel zum Befestigen eines Rahmenelementes an einer Montageplatte, Rahmenelement sowie Installationseinrichtung**

(71) Anmelder: Siemens Aktiengesellschaft, 80333 München (DE)
(72) Erfinder: Haller, Thomas, 8833, Samstagern (CH); Fuhrmann, Michael, 93105, Tegernheim (DE); Sedlmeier, Rainer, 93057, Regensburg (DE); Wu, Xian Chao, 100025, Beijign (CN)

(57) **Zusammenfassung**

Die Erfindung betrifft ein Befestigungsmittel (10) zum Befestigen eines Rahmenelementes (28) einer Installationseinrichtung (30) an einer Montageplatte (32) einer Elektroinstallation (50), das zwei Haltelemente (12a, 12b) aufweist, die in einer gemeinsamen Ebene nebeneinander angeordnet sind, relativ zueinander elastisch verformbar sind und jeweils mindestens einen Schenkel (Xa, Xb) aufweisen, wobei die Schenkel (Xa, Xb) so ausgebildet sind, dass sie entlang einer gedachten geraden Linie (14) innerhalb der gemeinsamen Ebene einander zugewandt sind und entlang der gedachten geraden Linie (14) einen Abschnitt (16) mit minimalem Abstand voneinander aufweisen und die Abstände der Schenkel (Xa, Xb) voneinander in allen anderen Abschnitten entlang der gedachten Linie (14) von dem Abschnitt (16) minimalen Abstands ausgehend zunehmen. Ferner betrifft die Erfindung ein Rahmenelement (28) sowie eine Installationseinrichtung (30).

## Beschreibung

Die vorliegende Erfindung betrifft ein Befestigungsmittel für ein Rahmenelement einer Installationseinrichtung, beispielsweise eines Schalters oder eines Raumtemperaturreglers, um dieses und damit die Installationseinrichtung an einer Montageplatte einer Elektroinstallation, insbesondere einer unter Putz angeordneten Elektroinstallation, zu befestigen. Ferner betrifft die Erfindung ein Rahmenelement zur Befestigung einer Installationseinrichtung an einer Montageplatte einer Elektroinstallation sowie eine Installationseinrichtung.

In herkömmlichen elektrischen Installationen sind die Steuerfunktionen mit der Energieverteilung fest verbunden. Nachträgliche Änderungen sind aus diesem Grund sehr schwierig durchzuführen. Auch übergeordnete Steuerfunktionen, wie ein zentrales Schalten aller Lichtkreise in einem Gebäude, können nur mit sehr hohem Aufwand realisiert werden.

Aus diesem Grund traten bestimmte europäische Organisationen zusammen, um einen gemeinsamen Standard für die Anwendungen in der Gebäudeautomation zu finden. Die Hauptziele dieses Standards sind höherer Komfort und größere Flexibilität.

Zu diesem Zweck unterzeichneten führende europäische Unternehmen aus der elektrotechnischen Industrie und Bau-Industrie die Statuten einer neuen Organisation, der KNX Association. Zu Beginn des 21. Jahrhunderts wurde die Spezifikation von KNX veröffentlicht, kurz darauf in die europäische Norm EN 50090 übernommen und später diese Norm als internationale Norm ISO/IEC 14543-3 akzeptiert. Der KNX-Standard ist ein offener Standard, dem sich mittlerweile fast 100 Firmen weltweit angeschlossen haben.

KNX ist ein Feldbus zur Gebäudeautomation und trennt die Steuerfunktionen und die Energieverteilung voneinander. Alle Geräte werden über einen Bus miteinander verbunden und können so Daten austauschen. Die Funktion der einzelnen Busteilnehmer wird durch ihre Programmierung bestimmt, die jederzeit verändert und angepasst werden kann. Die Geräte unterschiedlicher Hersteller können dabei uneingeschränkt miteinander in einem System eingesetzt werden, sofern sie die entsprechende Zertifizierung durch die KNX Association besitzen.

Insbesondere ist KNX ein Feldbus, der beschreibt, wie bei einer Installation Sensoren und Aktoren in einem Haus miteinander verbunden werden können, und der festlegt, wie Sensoren und Aktoren miteinander kommunizieren müssen.

Der KNX steuert zum Beispiel die Beleuchtung und Jalousien beziehungsweise Beschattungseinrichtungen, die Gebäudeheizung sowie die Schließ- und Alarmanlage. Mittels KNX ist auch die Fernüberwachung und -steuerung eines Gebäudes möglich. Eine Steuerung erfolgt dabei über den Benutzer selbst oder über einen mit entsprechender Software ausgerüsteten Computer. KNX wird derzeit vor allem bei neuen Wohn- und Zweckbauten installiert, kann jedoch auch bei der Modernisierung von Altbauten nachträglich eingebaut werden. KNX- Installationen sind mittlerweile nicht nur im gehobenen Wohnungsbau zu finden. Es werden bereits auch bei preiswerten Fertighäusern KNX-Netze in das Gebäude standardmäßig integriert.

Installationseinrichtungen, z.B. Schalter, Taster, Steckdosen, Temperaturregler oder Ähnliches, die mittels eines Rahmenelementes an einer Montageplatte, auch als mounting frame bezeichnet, einer Elektroinstallation, insbesondere einer Unterputz-Elektroinstallation, befestigbar ist, wobei der Einbauraum durch ein entsprechendes Bedienteil der Installationseinrichtung abgedeckt wird, sind in vielfältigen Ausführungen auf dem Markt bekannt.

Herkömmlicherweise werden die Installationseinrichtungen über Rahmenelemente derart an Montageplatten der Elektroinstallation befestigt, dass sie entweder mit diesen verschraubt werden und anschließend ein Gehäuse darüber gesteckt wird oder die Installationseinrichtungen Steckverbindungen, wie z.B. Schnapp- oder Rastverbindungen aufweisen, die durch Schlitze in der Montageplatte gesteckt werden. Dabei sorgen die Steckverbindungen für ein Verriegeln zwischen der Installationseinrichtung und der Montageplatte der Elektroinstallation. Sofern eine Installationseinrichtung jedoch gewechselt oder entfernt werden soll, muss sie von der Montageplatte abgezogen werden. Da die Steckverbindungen, wie Schnapp- oder Rasthacken, üblicherweise aus Kunststoff sind, besteht dabei jedoch die Gefahr, dass die Steckverbindungen abbrechen, so dass sie nicht mehr verwendbar sind. Insbesondere sind sowohl für eine Montage als auch eine Demontage der Installationseinrichtungen an den Elektroinstallationen Werkzeuge erforderlich.

Um auch moderne Installationseinrichtungen, wie beispielsweise Raumtemperaturregler, Dimmer, etc. , an bestehenden Montageplatten, insbesondere Montageplatten verschiedener Hersteller, befestigen zu können, besteht entsprechend Bedarf an einfachen Befestigungsmöglichkeiten, um ein schnelles und leichtes Befestigen von Rahmenelementen von Installationseinrichtungen, wie beispielsweise Raumtemperaturreglern, nach dem KNX Standard zu ermöglichen.

Entsprechend ist es Aufgabe der vorliegenden Erfindung, ein einfaches und kostengünstiges Befestigungsmittel zum einfachen Befestigen eines Rahmenelementes einer Installationseinrichtung und damit einer Installationseinrichtung an einer Montageplatte einer Elektroinstallation, insbesondere einer Unterputz-Elektroinstallation, zu schaffen.

Diese Aufgabe wird erfindungsgemäß durch ein Befestigungsmittel mit den Merkmalen gemäß dem unabhängigen Patentanspruch 1, durch ein Rahmenelement mit den Merkmalen gemäß Patentanspruch 21 sowie eine Installationseinrichtung mit den Merkmalen gemäß Patentanspruch 24 gelöst. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Befestigungsmittel beschrieben sind, selbstverständlich auch im Zusammenhang mit dem erfindungsgemäßen Rahmenelement und der erfindungsgemäßen Installationseinrichtung, und jeweils umgekehrt, so dass bezüglich der Offenbarung zu den einzelnen Erfindungsaspekten stets wechselseitig Bezug genommen wird beziehungsweise werden kann.

Gemäß dem ersten Aspekt der Erfindung wird die Aufgabe durch ein Befestigungsmittel mit den Merkmalen nach Anspruch 1 gelöst. Das Befestigungsmittel ist zum Befestigen eines Rahmenelementes einer Installationseinrichtung und damit einer Installationseinrichtung an einer Montageplatte einer Elektroinstallation, insbesondere einer Unterputz- Elektroinstallation, ausgebildet. Insbesondere weist das Befestigungsmittel zwei Haltelemente auf, die in einer gemeinsamen Ebene nebeneinander angeordnet und relativ zueinander elastisch verformbar bzw. biegbar sind. Die zwei Haltelemente weisen jeweils mindestens einen Schenkel auf, wobei die Schenkel derart ausgebildet sind, dass sie entlang einer gedachten geraden Linie innerhalb der gemeinsamen Ebene einander zugewandt sind und entlang der gedachten geraden Linie einen Abschnitt mit minimalem Abstand voneinander aufweisen und die Abstände der Schenkel voneinander in allen anderen Abschnitten entlang der gedachten Linie von dem Abschnitt minimalen Abstands ausgehend zunehmen.

Ein derartig ausgebildetes Befestigungsmittel ist einfach und kostengünstig ausgebildet und ermöglicht ein einfaches und schnelles Befestigen eines Rahmenelementes einer Installationseinrichtung und damit einer Installationseinrichtung an einer Montageplatte einer Elektroinstallation, insbesondere einer Unterputz-Elektroinstallation. Insbesondere ermöglicht ein derartig ausgebildetes Befestigungsmittel die Befestigung eines Rahmenelementes einer Installationseinrichtung und damit einer Installationseinrichtung an einer Montageplatte einer Elektroinstallation, insbesondere einer Unterputz-Elektroinstallation, ohne dass ein Werkzeug erforderlich ist. Durch die spezielle Ausgestaltung der zwei Halteelemente können diese leicht an einer entsprechend ausgebildeten Montageplatte einer Elektroinstallation befestigt werden. Die Montageplatten, bei denen diese Befestigungsmittel einsetzbar sind, weisen zumindest zwei Schlitze auf, die durch einen Steg voneinander getrennt sind. Das Befestigungsmittel wird, das heißt die zwei Halteelemente werden, in die zwei Schlitze der Montageplatte eingesteckt, wobei sie aufgrund des Steges der Montageplatte verspreizt werden. Die ist dadurch ermöglicht, weil die zwei Haltelemente in einer gemeinsamen Ebene nebeneinander angeordnet und relativ zueinander elastisch verformbar sind. Jedes Halteelement weist mindestens einen Schenkel auf. Diese Schenkel der Halteelemente sind entlang einer gedachten geraden Linie innerhalb der gemeinsamen Ebene einander zugewandt. Dabei weisen die Schenkel der Halteelemente entlang der gedachten geraden Linie einen Abschnitt mit minimalem Abstand voneinander auf. Dieser Abschnitt mit minimalem Abstand ist vorzugsweise im mittleren Bereich der Schenkel vorgesehen. Die Abstände der Schenkel voneinander nehmen in allen anderen Abschnitten entlang der gedachten Linie ausgehend von dem Abschnitt minimalen Abstands zu. Mit anderen Worte ausgedrückt, liegen die beiden Halteelemente beziehungsweise die jeweiligen Schenkel der Halteelemente in einem mittleren Abschnitt näher aneinander, als in den äußeren Abschnitten. Die Schenkel der Halteelemente bilden ungefähr ein X, wobei die Halteelemente nicht aneinander befestigt sind. Durch diese spezielle Ausgestaltung des Befestigungsmittels, insbesondere der Halteelemente, ist gewährleistet, dass bei einem Einstecken der Halteelemente in die entsprechenden Schlitze einer Montageplatte diese zunächst auseinandergespreizt werden. Sind die Halteelemente derart weit in die entsprechenden Schlitze der Montageplatte eingesteckt, dass der Abschnitt mittleren Abstandes auf der Höhe des Steges der Montageplatte ist, sind die zwei Halteelemente maximal auseinandergespreizt. Werden die zwei Halteelement weiter in die Schlitze der Montageplatte eingesteckt, schließen sich die zwei Halteelemente. Mit anderen Worten, nachdem der Abschnitt mit mittlerem Abstand der Halteelemente den Steg der Montageplatte passiert hat, zieht sich das Befestigungsmittel aufgrund der Federkraft der zwei Haltelemente selbstständig in Richtung der Montageplatte und zwar bis das Rahmenelement, an dem das Befestigungsmittel angeordnet ist, an der Montageplatte anliegt. Nach dem erstmaligen Kontakt der Schenkel der zwei Halteelemente mit dem Steg der Montageplatte und dem damit verbundenen Auseinanderspreizen der Halteelemente bleiben diese aufgrund der Federvorspannung der Halteelemente dauerhaft in Kontakt mit dem Steg der Montageplatte und umklammern diesen. Dies gewährleistet eine einfache und sichere Befestigung des Befestigungsmittel und damit eines Rahmenelementes einer Installationseinrichtung, wie eines Schalters, Tasters, einer Steckdose, eines Temperaturreglers oder Ähnliches, an der Montageplatte einer Elektroinstallation, insbesondere einer Unterputz-Elektroinstallation, wie beispielsweise eines Bussystems.

Vorteilhafterweise sind die Schenkel der Halteelemente eines bevorzugten Befestigungsmittels derart ausgebildet, dass zwischen ihnen ein erster und ein zweiter Bereich gebildet sind, die sich zu dem Abschnitt minimalen Abstands hin verjüngen. Dadurch wird das Einführen des Steges einer Montageplatte einer Elektroinstallation, der sich zwischen zwei Schlitzen, auch als Montageschlitze bezeichnet, einer Montageplatte befindet, in den ersten und den zweiten Bereich erleichtert. Dadurch, dass zwischen den zwei Halteelementen ein erster Bereich gebildet ist, der sich zu dem Abschnitt minimalen Abstands hin verjüngt, ist sichergestellt, dass die zwei Halteelemente einfach in die Schlitze der Montageplatte einer Elektroinstallation eingesteckt beziehungsweise die zwei Halteelemente einfach auf den Steg der Montageplatte einer Elektroinstallation aufgesteckt werden können. Der erste Bereich wirkt wie ein Trichter beim Einführen der zwei Halteelemente in die Schlitze der Montageplatte einer Elektroinstallation. Der zweite Bereich zwischen den zwei Halteelementen, der sich zu dem Abschnitt minimalen Abstands hin verjüngt, sorgt aufgrund der Verjüngung und der elastischen Verformbarkeit der Haltelemente zueinander, dass das Befestigungsmittel sich selbstständig an der Montageplatte einer Elektroinstallation heranziehen kann und dadurch an der Montageplatte sicher gehalten ist.

Gemäß einer bevorzugten Weiterentwicklung der Erfindung kann bei einem Befestigungsmittel vorgesehen sein, dass die Halteelemente entlang der gedachten geraden Linie spiegelsymmetrisch angeordnet sind. Dadurch kann das Einführen der Schenkel der Halteelemente beziehungsweise der Halteelemente in die Montageschlitze der Montageplatte/ erleichtert werden. Insbesondere kann durch die spiegelsymmetrische Ausgestaltung der Halteelemente ein Verkanten des Befestigungsmittels beim Befestigen desselben an einer Montageplatte einer Elektroinstallation verhindert werden.

Gemäß einer weiteren bevorzugten Weiterentwicklung der Erfindung kann bei einem Befestigungsmittel vorgesehen sein, dass sich die Bereiche, das heißt der erste und der zweite Bereich, zwischen den Schenkeln der Halteelemente linear zu dem Abschnitt minimalen Abstands hin verjüngen. Dadurch wird das Befestigungsmittel sicher in seine Montageposition an der Montageplatte einer Elektroinstallation geführt. Durch den linearen Verlauf der Bereiche oberhalb und unterhalb des Abschnitts minimalen Abstands ist einerseits ein einfaches und sicheres Auseinanderspreizen der Halteelemente voneinander gewährleistet. Andererseits schließen sich die Schenkel der Halteelemente und damit die Halteelemente aufgrund des linearen Verlaufs des zweiten Bereichs besonders gut, wodurch ein Heranziehen und anschließendes Halten des Befestigungsmittels an der Montageplatte einer Elektroinstallation gewährleistet ist.

Die Schenkel beziehungsweise Halteelemente weisen vorteilhafterweise im Bereich des Abschnittes minimalen Abstandes zueinander einen bogenförmigen Verlauf auf. Dies gewährleistet das besonders einfache Aufstecken beziehungsweise Entlanggleiten der Halteelemente des Befestigungsmittels auf der Montageplatte einer Elektroinstallation, insbesondere auf dem Steg der Montageplatte einer Elektroinstallation.

Vorteilhafterweise verjüngt sich der erste Bereich zwischen den Schenkeln der Halteelemente eines Befestigungsmittels derart zu dem Abschnitt minimalen Abstands hin, dass die den ersten Bereich bildenden Teile der Schenkel einen Einführungsbereich zum Einführen eines Stegs, der zwischen zwei Montageschlitzen der Montageplatte ausgebildet ist, bilden. Hierdurch ist sichergestellt, dass die Halteelemente des Befestigungsmittels einfach in die Schlitze der Montageplatte eingesteckt werden können. Erst nachdem die Halteelemente ein kleines Stück in die Schlitze der Montageplatte eingesteckt worden sind, kontaktieren die Schenkel der Halteelemente den Steg der Montageplatte. Das heißt, durch die Verjüngung des ersten Bereiches beziehungsweise den kleiner werdenden Abstand der Schenkel zueinander, wird das bereits etwas eingesteckte Befestigungsmittel durch den Steg der Montageplatte zentriert. Dadurch bildet der erste Bereich zwischen den Schenkeln des Halteelementes einen, insbesondere trichterförmigen, Einführungsbereich zum Einführen des Stegs einer Montageplatte.

Allgemein betrachtet ist der erste Bereich zwischen den zwei Halteelementen des Befestigungsmittels der Bereich, der beim Einstecken des Befestigungsmittels, insbesondere der zwei Halteelemente, in die Schlitze der Montageplatte diesen zunächst zugewandt ist.

Vorteilhafterweise sind die den ersten Bereich bildenden Teile der Schenkel in einen Winkel α von kleiner 50°, zueinander angeordnet. Dadurch kann das Einführen des Stegs eines Haltebügels beziehungsweise das Aufstecken der zwei Halteelemente des Befestigungsmittels auf den Steg einer Montageplatte besonders einfach gestaltet werden.

Vorteilhafterweise verjüngt sich der zweite Bereich zwischen den Schenkeln derart zu dem Abschnitt minimalen Abstands hin, dass die den zweiten Bereich bildenden Teile der Schenkel einen Arbeitsbereich zum Halten eines/des Stegs, der zwischen zwei Montageschlitzen der Montageplatte ausgebildet ist, bilden. Dadurch wird der Steg besonders gut gehalten. Arbeitsbereich bedeutet im Sinne der Erfindung, dass aufgrund des Aufspreizens der zwei Halteelemente beim Aufstecken auf den Steg der Montageplatte und der elastischen Verformbarkeit der beiden Halteelemente, das Befestigungsmittel an der Montageplatte der Elektroinstallation herangezogen wird, falls sich der Steg der Montageplatte an den Teilen der Schenkel der zwei Halteelemente befindet, die den zweiten Bereich bilden. Mit anderen Worten ausgedrückt, ermöglicht die Verjüngung des zweiten Bereiches zwischen den Schenkeln der Haltelemente zu dem Abschnitt minimalen Abstands hin, ein aktives Heranziehen des Befestigungsmittels und damit eines Rahmenelementes einer Installationseinrichtung an der Montageplatte einer Elektroinstallation, wie eines unter Putz angeordneten Bussystems.

Vorteilhafterweise weisen die den zweiten Bereich bildenden Teile der Schenkel der Halteelemente eines Befestigungsmittels bei einer maximalen elastischen Verformung der Halteelemente voneinander, aufgrund der Durchführung des Stegs der Montageplatte durch den Abschnitt minimalen Abstands, einen Winkel von mindestens 20 ° zueinander auf. Dies sorgt für ein Hineindrücken bzw. Heranziehen des Stegs in den Arbeitsbereich des Befestigungsmittels beziehungsweise ein Heranziehen des Befestigungsmittels an der Montageplatte einer Elektroinstallation.

Gemäß einer weiteren bevorzugten Weiterentwicklung der Erfindung kann bei einem Befestigungsmittel vorgesehen sein, dass die Schenkel in dem Abschnitt minimalen Abstands einen Spalt zwischen sich bilden, wenn die Haltelemente entspannt sind, das heißt nicht elastisch verformt sind. Dies ermöglicht ein besonders einfaches Aufstecken des Befestigungsmittels auf einer Montageplatte einer Elektroinstallation. Alternativ können sich die Schenkel der Haltelemente im Abschnitt minimalen Abstands berühren.

Vorteilhafterweise weisen die Schenkel der Haltelemente eines bevorzugten Befestigungsmittels innere Schenkel und äußere Schenkel auf, die miteinander verbunden sind, wobei die inneren Schenkel der zwei Haltelemente einander zugewandt sind. Dadurch wird eine besonders gute elastische Verformbarkeit und Stabilität der zwei Haltelemente geschaffen.

Gemäß einer weiteren bevorzugten Weiterentwicklung der Erfindung kann bei einem Befestigungsmittel vorgesehen sein, dass die inneren und die äußeren Schenkel eines jeden Halteelementes im Bereich ihres Übergangs einen Winkel von 20° bis 60°, insbesondere von 40° bis 50°, zwischen sich bilden. Dadurch nehmen die Schenkel eine Art Keilform ein, so dass das Einführen in die Montageschlitze besonders einfach gestaltet ist.

Vorteilhafterweise sind die äußeren Schenkel eines jeden Halteelementes so ausgebildet, dass sie ein gebogenes, freies Ende aufweisen und im Bereich der Biegung ein Winkel größer 90° gebildet ist. Dadurch sind die äußeren Schenkel der Halteelement zueinander geneigt, wodurch die Vorspannung aufeinander zu verstärkt wird.

Gemäß einer weiteren bevorzugten Weiterentwicklung der Erfindung kann bei einem Befestigungsmittel vorgesehen sein, dass die inneren und die äußeren Schenkel eines jeden Haltelementes so zueinander ausgebildet sind, dass die Haltelemente in einer Seitenansicht jeweils eine im Wesentlichen D-förmige Kontur aufweisen. Derartig ausgebildete Halteelemente weisen eine hohe Stabilität auf.

Vorteilhafterweise sind die inneren Schenkel eines jeden Halteelementes eines bevorzugten Befestigungsmittels an ihren den jeweiligen äußeren Schenkeln abgewandten Enden in einer Richtung senkrecht zu der Ebene der Haltelemente um 180° derart gebogen, dass sie ein Bogenelement bilden, das die beiden inneren Schenkel miteinander verbindet. Dies sorgt für eine Versteifung des Befestigungsmittels, so dass die Haltekraft des Rahmenelementes an der Montageplatte verstärkt wird. Ferner kann das Befestigungsmittel durch eine derartige Ausgestaltung einfach an einem Rahmenelement einer Installationseinrichtung, wie eines Schalters, eines Tasters, einer Steckdosen, eines Temperaturregler oder Ähnliches, befestigt werden.

Vorteilhafterweise entspricht der minimale Innenradius des Bogenelements eines bevorzugten Befestigungsmittels dem dreifachen Durchmesser der Schenkel der Halteelemente des Befestigungsmittels. Dadurch wird eine besonders gute Versteifung erzielt. Insbesondere vorteilhaft ist es, wenn der minimale Innenradius des Bogenelements zumindest dem dreifachen Durchmesser der Schenkel der Halteelemente des Befestigungsmittels, insbesondere der Drahtstärke des der Schenkel der Halteelemente des Befestigungsmittels, entspricht. Dies stellt einen optimalen Wert zwischen benötigtem Bauraum und einer Spannungsverteilung dar. Vorteilhafterweise ist das Befestigungsmittel aus einem Metalldraht ausgebildet.

Gemäß einer besonders bevorzugten Weiterentwicklung der Erfindung kann bei einem Befestigungsmittel vorgesehen sein, dass das Befestigungsmittel einstückig, insbesondere monolithisch, ausgebildet ist. Dadurch ist die Anzahl an Bauteilen zum Montieren eines Rahmenelementes an einer Montageplatte eines Elektroinstallationsgeräts minimal. Ferner ist die Herstellung des Befestigungsmittels vereinfacht und kostengünstig. Ebenso gewährleistet ein derartiges Befestigungsmittel eine hohe Steifigkeit und Stabilität der Halteelemente und der weiteren Bauteile des Befestigungsmittels.

Vorteilhafterweise weist ein bevorzugtes Befestigungsmittel Befestigungselemente zum kraft- und/oder stoffschlüssigen Befestigen an dem Rahmenelement auf. Die Befestigung kann mittels Schraubverbindungen erfolgen. Ferner kann das Befestigungsmittel mittels geeigneter kraft- und/oder stoffschlüssiger Verbindungen, wie z. B. Nieten, Schweißen, Kleben, an dem Rahmenelement befestigt sein.

Vorteilhafterweise ist das Befestigungsmittel durch Heißverstemmen mit dem Rahmenelement einer Installationseinrichtung verbindbar. Dadurch wird eine besonders einfache und stabile Verbindung zwischen dem Befestigungsmittel und dem Rahmenelement einer Installationseinrichtung geschaffen.

Gemäß dem zweiten Aspekt der Erfindung wird die Aufgabe durch ein Rahmenelement einer Installationseinrichtung, insbesondere eines Schalters, eines Tasters oder eines Raumtemperaturreglers, welches wenigstens ein daran angebrachtes Befestigungsmittel aufweist, das gemäß dem ersten Aspekt der Erfindung ausgebildet ist, gelöst. Ein Rahmenelement mit wenigstens einem gemäß dem ersten Aspekt der Erfindung ausgebildeten Befestigungsmittel ermöglicht ein einfaches Befestigen des Rahmenelementes und damit einer Installationseinrichtung an einer Montageplatte einer Elektroinstallation, insbesondere einer Unterputz-Elektroinstallation.

Das Rahmenelement ist vorzugsweise zur Aufnahme einer Installationseinrichtung ausgebildet, welche im befestigten Zustand des Rahmenelementes an der Montageplatte einer Elektroinstallation mit der Elektroinstallation elektrisch verbindbar ist.

Gemäß einer bevorzugten Weiterentwicklung der Erfindung kann bei dem Rahmenelement vorgesehen sein, dass an dem Rahmenelement ein Zwischenelement, insbesondere eine Zwischenplatte, angeordnet ist, die als Distanzelement zwischen dem Rahmenelement und der Elektroinstallation dient. Hierdurch können das Rahmenelement und damit die Installationseinrichtung in einer optimalen Distanz zur Elektroinstallation oder zu der Wand, in der die Elektroinstallation angeordnet ist, angebracht werden.

Gemäß dem dritten Aspekt der Erfindung wird die Aufgabe durch eine Installationseinrichtung, aufweisend ein Rahmenelement zur Befestigung der Installationseinrichtung an einer Montageplatte einer Elektroinstallation, wobei das Rahmenelement gemäß dem zweiten Aspekt der Erfindung ausgebildet ist, gelöst.

Die Installationseinrichtung kann beispielsweise ein Schalter, ein Taster, eine Steckdosen, ein Temperaturregler oder Ähnliches sein, die mittels des Rahmenelementes an einer Montageplatte einer Elektroinstallation, insbesondere einer Unterputz-Elektroinstallation, befestigbar ist. Eine Installationseinrichtung mit einem derartigen Rahmenelement, welches wenigstens ein gemäß dem ersten Aspekt der Erfindung ausgebildetes Befestigungsmittel aufweist, ermöglicht ein einfaches Befestigen der Installationseinrichtung an einer Montageplatte einer Elektroinstallation, insbesondere einer Unterputz-Elektroinstallation.

Gemäß einer besonders bevorzugten Weiterentwicklung der Erfindung kann bei der Installationseinrichtung vorgesehen sein, dass das Rahmenelement integraler Bestandteil der Installationseinrichtung ist. Das heißt, bevorzugt ist das Rahmenelement ein Teil des Gehäuses der Installationseinrichtung oder bildet das Gehäuse der Installationseinrichtung. Besonders bevorzugt ist das Rahmenelement monolithisch mit dem Gehäuse der Installationseinrichtung hergestellt.

Vorteilhafterweise ist das Rahmenelement zur Aufnahme eines Funktionselementes ausgebildet, das im befestigten Zustand des Rahmenelements an der Montageplatte einer Elektroinstallation mit der Elektroinstallation elektrisch verbindbar ist.

Die Erfindung und ihre Weiterbildungen sowie deren Vorteile werden nachfolgen anhand der Zeichnungen näher erläutert. Es zeigen jeweils schematisch:
- Fig. 1: eine Seitenansicht eines erfindungsgemäßen Befestigungsmittels,
- Fig. 2: eine Draufsicht des Befestigungsmittels gemäß Fig. 1,
- Fig. 3: eine perspektivische Ansicht des Befestigungsmittels gemäß Fig. 1,
- Fig. 4: eine perspektivische Ansicht einer Rückseite einer Installationseinrichtung mit daran befestigten Befestigungsmitteln,
- Fig. 5: eine perspektivische Ansicht einer Installationseinrichtung mit daran befestigten Befestigungsmitteln sowie einer an einer Elektroinstallation angeordneten Montageplatte,
- Fig. 6: eine perspektivische Ansicht, die einen Ausgangsschritt einer Montage einer Installationseinrichtung an einer Montageplatte darstellt,
- Fig. 7: eine perspektivische Ansicht, die einen Zwischenschritt der Montage der Installationseinrichtung gemäß Fig. 6 an der Montageplatte zeigt,
- Fig. 8: eine perspektivische Ansicht einer Montageplatte, an dem eine Installationseinrichtung montiert ist,
- Fig. 9: eine Seitenansicht auf eine Installationseinrichtung, die mittels Befestigungsmitteln an einer Montageplatte einer Elektroinstallation montiert ist, und
- Fig. 10: eine Seitenansicht auf eine andere Installationseinrichtung, die mittels Befestigungsmitteln an einer Montageplatte einer Elektroinstallation montiert ist.

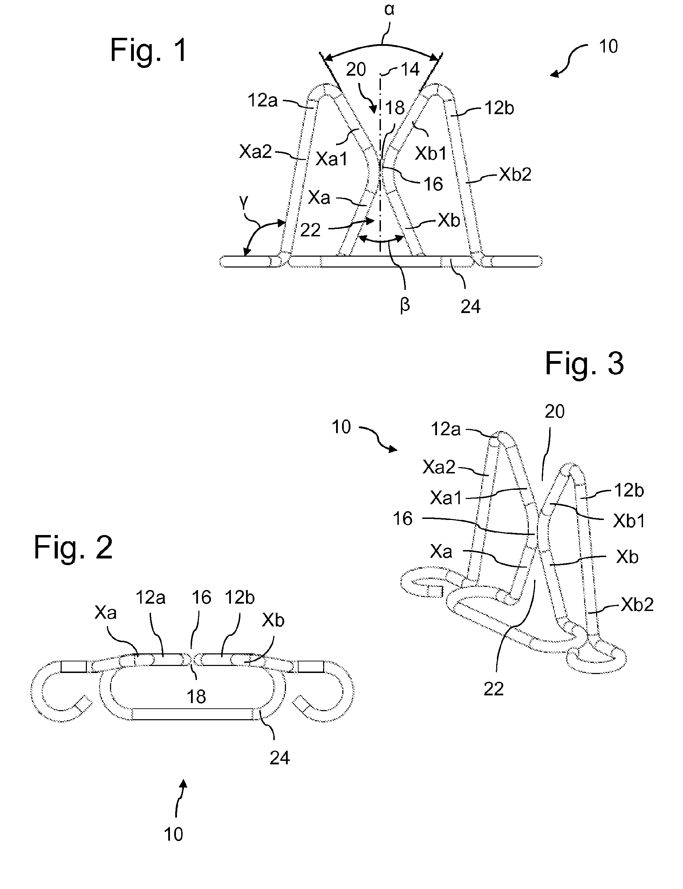

Elemente mit gleicher Funktion und Wirkungsweise sind in den Figuren 1 bis 10 jeweils mit denselben Bezugszeichen versehen.

Fig. 1 zeigt ein erfindungsgemäßes Befestigungselement 10 in einer Seitenansicht. In Fig. 3 ist das Befestigungselement 10 in einer perspektivischen Ansicht gezeigt. Das Befestigungsmittel 10 ist integral bzw. monolithisch aus einem Metalldraht ausgebildet und weist zwei Haltelemente 12a, 12b auf.

Die Halteelemente 12a, 12b sind in einer gemeinsamen Ebene nebeneinander angeordnet und relativ zueinander elastisch, insbesondere federelastisch, verformbar bzw. biegbar. Jedes Haltelement 12a, 12b weist einen Schenkel Xa, Xb auf. Die Schenkel Xa, Xb sind derart ausgebildet, dass sie entlang einer gedachten geraden Linie 14 innerhalb der Ebene einander zugewandt sind und entlang der gedachten geraden Linie 14 einen Abschnitt 16 mit minimalem Abstand voneinander aufweisen und die Abstände der Schenkel Xa, Xb voneinander in allen anderen Abschnitten entlang der gedachten Linie von dem Abschnitt 16 minimalen Abstands ausgehend zunehmen. Insbesondere sind die Haltelemente 12a, 12b entlang der gedachten Linie 14 spiegelsymmetrisch angeordnet. Im Bereich des Abschnitts 16 minimalen Abstands sind die Schenkel Xa, Xb voneinander beabstandet, d.h. es ist ein kleiner Spalt 18 zwischen den Schenkeln Xa, Xb in dem Abschnitt 16 minimalen Abstands gebildet. Zwischen den Schenkeln Xa, Xb sind ein erster Bereich 20 und ein zweiter Bereich 22 gebildet, die sich jeweils zu dem Abschnitt 16 minimalen Abstands linear hin verjüngen.

Vorzugsweise ist das Befestigungsmittel 10 derart ausgebildet, dass die Schenkel Xa, Xb der zwei Haltelemente 12a, 12b innere Xa1, Xb1 und äußere Xa2, Xb2 Schenkel aufweisen, die derart miteinander verbunden sind, dass die Haltelemente 12a, 12b in einer Seitenansicht jeweils eine im Wesentlichen D-förmige Kontur einnehmen und entlang der gedachten Linie 14 spiegelsymmetrisch angeordnet sind. Die inneren Xa1, Xb1 und die äußeren Schenkel Xa2, Xb2 bilden im Bereich ihres Übergangs einen Winkel von 20° bis 60°, bevorzugt von 40° bis 50°, zwischen sich. Die inneren Schenkel Xa1, Xb1 sind an ihren den jeweiligen äußeren Schenkeln Xa2, Xb2 abgewandten Enden, d.h. in einer Richtung senkrecht zu der Ebene der Halteelemente um 180° derart gebogen sind, dass sie ein Bogenelement 24 bilden, das die beiden inneren Schenkel Xa1, Xb1 miteinander verbindet, wie in Fig. 2 zu sehen ist, in der das Befestigungselement 10 in einer Draufsicht gezeigt ist. Die Haltelemente 12a, 12b weisen eine bestimmte elastische Vorspannung in einer Richtung zueinander auf, d.h. wenn die Haltelemente 12a, 12b auseinandergespreizt, also von der gedachten Linie 14 weg gebogen oder gedrückt werden, kehren diese in ihre ursprüngliche Position zurück.

Insbesondere ist der erste Bereich 20 zwischen den beiden Haltelementen 12a, 12b als Einführungsbereich 20 ausgebildet, der zum Einführen eines Stegs beziehungsweise zum Aufstecken auf einen Steg, der sich zwischen zwei Montageschlitzen einer später beschriebenen Montageplatte, eines sogenannten mounting frames, befindet, ausgebildet ist. In dem Einführungsbereich 20 bilden die inneren Schenkel Xa1, Xb1 einen Winkel α von kleiner 50°. Der zweite Bereich 22 zwischen den beiden inneren Schenkeln Xa1, Xb1 ist als Arbeitsbereich 22 ausgebildet, der zum Halten des Stegs der Montageplatte ausgebildet ist. In dem Arbeitsbereich 22 bilden die inneren Schenkel Xa1, Xb1 einen Winkel β von größer 20° zueinander, bevorzugt 45°. Die äußeren Schenkel Xa2, Xb2 sind so ausgebildet, dass sie ein gebogenes, freies Ende aufweisen und im Bereich der Biegung ein Winkel γ größer 95°, bevorzugt 100°, gebildet ist. Dies sorgt für eine zusätzliche Versteifung und Stabilität des Befestigungsmittels 10. Der minimale Innenradius des Bogenelements 24 beträgt zumindest die dreifache Drahtstärke des Metalldrahts. Dies stellt einen optimalen Wert für den Kompromiss aus benötigtem Bauraum zum Einsetzen des Befestigungsmittels 10 und einer Spannungsverteilung beim Montieren von Rahmenteilen dar.

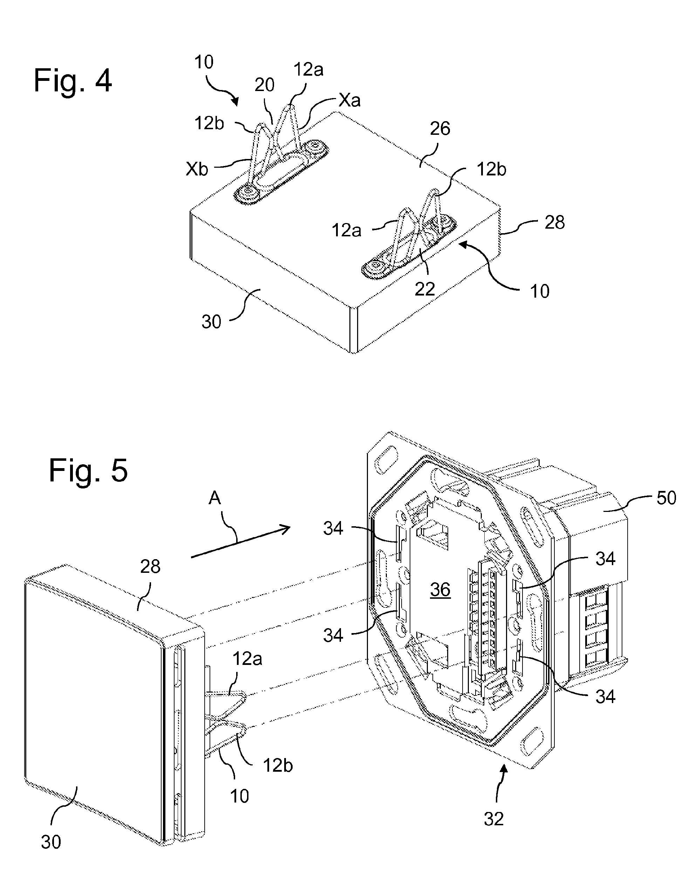

In Fig. 4 ist eine perspektivische Ansicht einer Rückseite 26 einer Installationseinrichtung 30 mit daran befestigten Befestigungsmitteln 10 dargestellt.

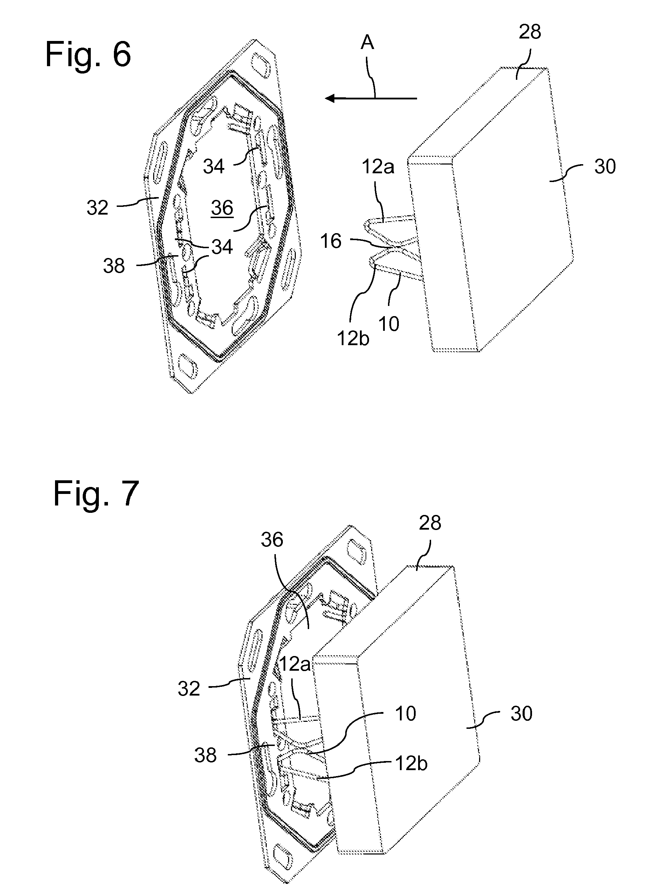

Wie Fig. 4 zeigt, befindet sich das Befestigungsmittel 10 an zwei Stellen an der Rückseite 26 des Rahmenelementes 28 der Installationseinrichtung 30, die beispielsweise als ein KNX-Raumtemperaturregler ausgebildet sein kann. D.h., die Befestigungsmittel 10 ragen aus derjenigen Seite 26 des Rahmenelementes 28 heraus, die sich im montierten Zustand an einer in Fig. 5 oder 6 zu sehenden Montageplatte 32 einer Elektroinstallation 50 bzw. einer Wand eines Gebäudes oder dergleichen befindet. Zum guten und gleichmäßigen Halt des Rahmenelementes 28 und damit der Installationseinrichtung 30 an der Montageplatte 32 sind zwei Befestigungsmittel 10 vorgesehen. Es wird zur Vereinfachung nur die Montage mittels eines Befestigungsmittels 10 beschrieben, da diese für beide identisch ist. Das Befestigungsmittel 10 ist durch Heißverstemmen an dem Rahmenelement 28, insbesondere der Rückseite 26 des Rahmenelementes 28 fest verbunden. Genauer sind die freien Enden der äußeren Schenkel Xa2, Xb2, mit dem Rahmenelement 28 derart verbunden, dass das Bogenelement 24 an dem Rahmenelement 28 anliegt. Dadurch stehen die Schenkel Xa, Xb im Wesentlichen senkrecht von der Rückseite 26 des Rahmenelementes 28 vor und werden daran abgestützt.

Die Montageplatte 32 kann an einer entsprechenden Stelle einer Wand eines Gebäudes, bei der sich die anzuschließende Elektroinstallation 50 in einer Wanddose befindet, in herkömmlicher Weise mittels Schrauben befestigt sein. Da die Montage einer Montageplatte 32 an sich hinreichend bekannt ist, entfällt eine Beschreibung der Montage desselben an der Wand, der Wanddose beziehungsweise der Elektroinstallation 50. Zur Vereinfachung ist die Montageplatte 32 in den nachfolgenden Figuren 5 bis 8 im nicht montierten Zustand gezeigt.

Wie in den Fig. 5 und 6 gezeigt, weist die Montageplatte zwei Paare aus voneinander beabstandeten Schlitzen 34 auf, die sich auf gegenüberliegenden Seiten der Montageplatte 32 mit einer Aussparung 36 zur Kontaktierung der Elektroinstallation 50 zwischen ihnen befinden. Montageplatten 32 für Elektroinstallationen 50, beispielsweise Bussystemen, weisen üblicherweise derartige Schlitze 34 auf, da die Befestigung eines Rahmenelementes 28 einer Installationseinrichtung 30 an der Montageplatte 32 je nach Bauart entweder über Verschraubungen oder durch Steckverschlüsse mit Steckverbindungen, die durch die Schlitze 34 gesteckt werden, erfolgt. Somit lässt sich das erfindungsgemäße Befestigungsmittel 10 problemlos auch bei bekannten Montageplatten 32 verwenden.

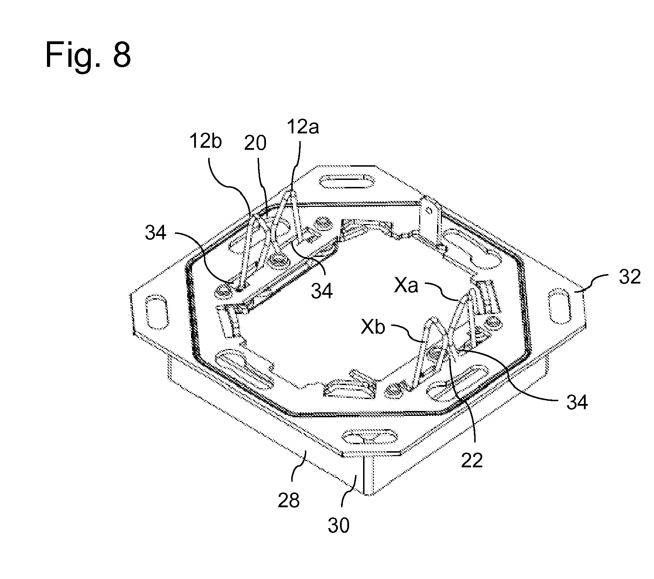

Zur Montage der Installationseinrichtung 30 wird das Rahmenelement 28 der Installationseinrichtung 30 mit der Rückseite 26 voran so auf die Montageplatte 32 geschoben, dass jeweils ein Schenkel Xa, Xb in jeweils einen entsprechenden Schlitz 34 der Montageplatte 32 geschoben beziehungsweise eingesteckt wird. Die Montagerichtung ist in den Fig. 5 und 6 durch einen Pfeil A angegeben. Dabei werden Stege 38 der Montageplatte, die sich zwischen den Schlitzen 34 befinden, in den Einführungsbereich 20 des Befestigungsmittels 10 eingeführt und beim weiteren Aufstecken der Installationseinrichtung 30 auf die Montageplatte 32 durch den Abschnitt 16 minimalen Abstandes zwischen die Haltelemente 12a, 12b gedrückt, wie in Fig. 7 zu sehen ist. Da der Abschnitt 16 minimalen Abstandes zwischen den Haltelementen 12a, 12b beziehungsweise den Schenkeln Xa, Xb der Haltelemente 12a, 12b schmaler ist als die Stege 38 zwischen den Schlitzen 34, werden die Haltelemente 12a, 12b auseinander gedrückt. Da sich der Arbeitsbereich 22 bezogen auf die Montagerichtung A zu dem Bogenelement 24 des Befestigungsmittels 10 hin erweitert, ist beim Aufstecken die Engstelle, d. h. der Abschnitt 16 minimalen Abstandes, zu überwinden, um die Haltelemente 12a, 12b beziehungsweise die Schenkel Xa, Xb der Haltelemente 12a, 12b durch die Stege 38 zwischen den Schlitzen 34 auseinander zu drücken. Sobald die Stege 38 zwischen den Schlitzen 34 den Abschnitt 16 minimalen Abstandes der Schenkel Xa, Xb der Haltelemente 12a, 12b passiert haben und sich daher im Arbeitsbereich 22 befinden, bewegen sich die Schenkel Xa, Xb aufgrund ihrer federelastischen Ausbildung beziehungsweise ihrer Ausdehnung wieder aufeinander zu. Aufgrund der besonderen erweiternden Formgebung der Halteelemente 12a, 12b im Arbeitsbereich 22 in der Montagerichtung A gesehen, ziehen die Halteelemente 12a, 12b das Rahmenelement 28 und damit die an dem Rahmenelement 28 sitzende Installationseinrichtung 30 auf die Stege 38 und damit an die Montageplatte 32 heran. Dadurch wird die Installationseinrichtung 30 an die Montageplatte 32 gezogen, gegen diesen gedrückt beziehungsweise an diesem gehalten. Das Befestigungsmittel 10 sorgt somit für ein aktives Heranziehen des Raumtemperaturreglers 30 an die Montageplatte 32 bzw. die Elektroinstallation 50. Die Haltelemente 12a, 12b gehen also in dem Raum einer Wanddose beziehungsweise der Elektroinstallation 50 hinter der Montageplatte 32 wieder in ihre ursprüngliche Position zurück, wie in Fig. 8 zu sehen ist. Die Installationseinrichtung 30 wird somit von dem Befestigungsmittel 10 in seine endgültige Montageposition gezogen und dort gehalten. Dadurch ist es möglich, dass die Installationseinrichtung 30 nicht mit einer Kraft montiert werden muss, die diese eventuell beschädigen könnte. Dies ist insbesondere bei den berührungsempfindlichen Displays von Installationseinrichtungen 30, wie beispielsweise Raumtemperaturreglern, von Bedeutung, da diese nicht mit zu großem Kraftaufwand auf eine Montageplatte 32 gesteckt werden dürfen. Durch die besondere Formgebung des Arbeitsbereichs 22 zwischen den Haltelementen 12a, 12b lässt sich die Installationseinrichtung 30 auch wieder von der Montageplatte 32 mit einem bestimmten Kraftaufwand abziehen, der so groß ist, dass ein zu leichtes Entwenden desselben verhindert wird, aber auch nicht zu klein ist, dass er wackelt. In der untersten Einbaulage sind bei einer Überschneidung zwischen dem Befestigungsmittel 10 und der Montageplatte 32 von der 1,5-fachen Drahtstärke bevorzugt Abzugskräfte von mindestens 10 N erforderlich. Je nach Einbaulage sind jedoch Abzugskräfte von maximal 40 N erforderlich. Die den zweiten Bereich 22 bildenden Teile der Schenkel Xa, Xb weisen bei einer maximalen elastischen Verformung der Halteelemente 12a, 12b voneinander aufgrund der Durchführung des Stegs 38 der Montageplatte 32 durch den Abschnitt 16 minimalen Abstands einen Winkel β von mindestens 20° zueinander auf.

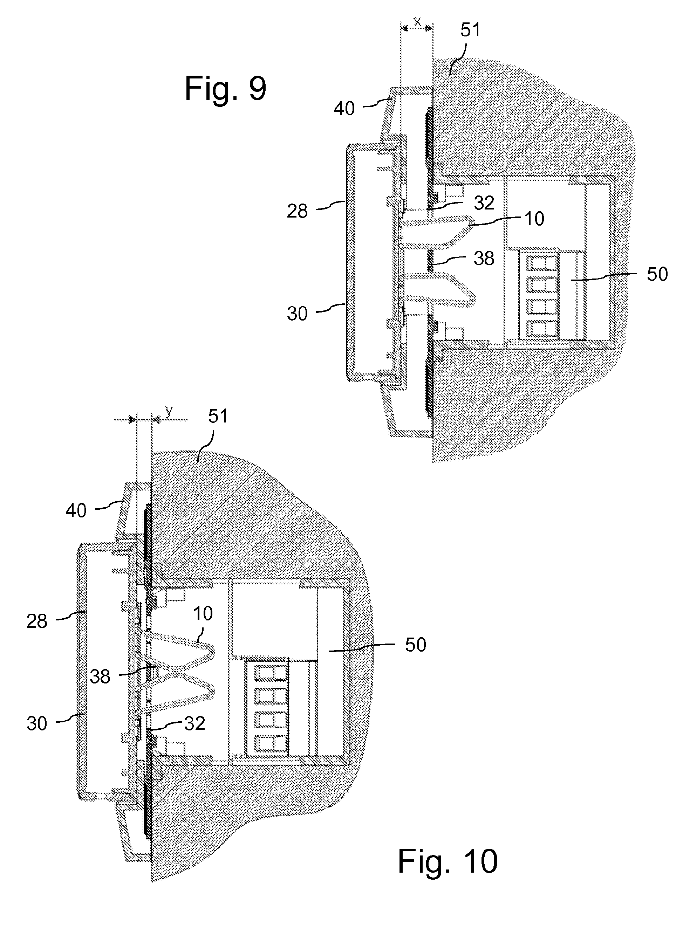

Fig. 9 zeigt eine Seitenansicht auf eine Installationseinrichtung 30, die mittels Befestigungsmitteln 10 an einer Montageplatte 32 einer Elektroinstallation 50 montiert ist. Fig. 10 zeigt eine Seitenansicht auf eine andere Installationseinrichtung 30, die mittels Befestigungsmitteln 10 an einer Montageplatte 32 einer Elektroinstallation 50 montiert ist. In beiden Fig. 9 und 10 ist an dem jeweiligen Rahmenelement 28 ein Zwischenelement 40, hier in Form einer Zwischenplatte, angeordnet, die als Distanzelement zwischen dem jeweiligen Rahmenelement 28 und der Elektroinstallation 50 dient. Hierdurch können das Rahmenelement 28 und damit die Installationseinrichtung 30 in einer optimalen Distanz zur Elektroinstallation 50 oder zu der Wand 51, in der die Elektroinstallation 50 angeordnet ist, angebracht werden. In Fig. 9 ist das Zwischenelement 40 größer ausgebildet, als das Zwischenelement 40 in Fig. 10. Dadurch ist die Installationseinrichtung 30 in Fig. 9 weiter von der Montageplatte 32 der Elektroinstallation 50 angeordnet, als in Fig. 10. Dies ist durch die eingezeichneten Distanzen x und y kenntlich gemacht. In Fig. 9 ist das dargestellte Befestigungsmittel 10 nicht vollständig in die Schlitze 34 der Montageplatte 32 eingesteckt. Daher drückt der Steg 38 der Montageplatte 32 die Halteelemente 12a, 12b auseinander. Aufgrund der elastischen Verbiegbarkeit der Halteelemente 12a, 12b klemmen diese den Steg 38 ein und halten dadurch die Installationseinrichtung 30 an der Montageplatte 32 fest. Das Zwischenelement 40 dient auch dazu, dass die Installationseinrichtung 30 nicht verkippt, das heißt das Zwischenelement 40 zentriert die Installationseinrichtung 30 an der Wand 51 bzw. der Montageplatte 32. In Fig. 10 ist das Zwischenelement 40 kleiner ausgebildet. Die Installationseinrichtung 30 ist näher an der Montageplatte 32 angeordnet. Das dargestellte Befestigungsmittel 10 ist vollständig in die Schlitze 34 der Montageplatte 32 eingesteckt und hält dadurch die Installationseinrichtung 30 besonders sicher an der Montageplatte 32.

Das heißt, je nach Art des Rahmenelementes, kann ein Zwischenelement in Form eines Designrahmens zwischen dem Rahmenelement und der Montageplatte montiert werden. Dies kann dadurch geschehen, dass der Designrahmen von der Rückseite des Rahmenelementes gegen die Montageplatte oder gegen die Wand gedrückt wird. Bei entsprechender Überlappung zwischen dem Gehäuse des Rahmenelementes und dem Designrahmen kann der Designrahmen Schlitze aufweisen, durch die die Haltelemente des wenigstens einen Befestigungsmittels gesteckt werden. Da verschiedene Hersteller Zwischenelemente beziehungsweise Designrahmen mit unterschiedlichen Höhen verwenden, lassen sich mit dem erfindungsgemäßen Befestigungsmittel sogar Höhenunterschiede der Rahmenelemente, d.h. Unterschiede in einer Abmessung in der Montagerichtung, von bis zu 5 mm realisieren. Ferner erfüllen die Haltelemente ihre Haltefunktion auch bei leicht versetztem bzw. schiefem Aufstecken. Selbstverständlich sind auch andere Befestigungsmöglichkeiten für Befestigungsmittel an einem Rahmenelement als Heißverstemmen möglich, wie beispielsweise Löten, Schrauben, Kleben oder dergleichen. Das Befestigungsmittel kann Befestigungselemente zum kraft- und/oder stoffschlüssigen Befestigen an dem Rahmenelement aufweisen. Die Schenkel der Halteelemente können sich in dem Abschnitt minimalen Abstands auch berühren. Die inneren Schenkel müssen sich nicht zu dem Abschnitt minimalen Abstands hin linear verjüngen, sondern können auch eine konvexe Form aufweisen.

### Bezugszeichenliste

- 10: Befestigungsmittel
- 12a, 12b: Halteelement
- 14: gedachte Linie
- 16: Abschnitt minimalen Abstands
- 18: Spalt
- 20: erster Bereich
- 22: zweiter Bereich
- 24: Bogenelement
- 26: Rückseite
- 28: Rahmenelement
- 30: Installationseinrichtungen
- 32: Montageplatte/mounting frame
- 34: Schlitz
- 36: Aussparung
- 38: Steg
- 40: Zwischenplatte
- 50: Elektroinstallation, insbesondere UnterputzElektroinstallation
- 51: Wand
- Xa, Xb: Schenkel
- Xa1, Xb1: innerer Schenkel
- Xa2, Xb2: äußerer Schenkel
- A: Montagerichtung
- α: Winkel im Einführungsbereich
- β: Winkel im Arbeitsbereich
- γ: Winkel im Bereich der Biegung der äußeren Schenkel

## Patentansprüche

1. Befestigungsmittel (10) zum Befestigen eines Rahmenelementes (28) einer Installationseinrichtung (30) an einer Montageplatte (32) einer Elektroinstallation (50), das zwei Haltelemente (12a, 12b) aufweist, die in einer gemeinsamen Ebene nebeneinander angeordnet sind, relativ zueinander elastisch verformbar sind und jeweils mindestens einen Schenkel (Xa, Xb) aufweisen, wobei die Schenkel (Xa, Xb) so ausgebildet sind, dass sie entlang einer gedachten geraden Linie (14) innerhalb der gemeinsamen Ebene einander zugewandt sind und entlang der gedachten geraden Linie (14) einen Abschnitt (16) mit minimalem Abstand voneinander aufweisen und die Abstände der Schenkel (Xa, Xb) voneinander in allen anderen Abschnitten entlang der gedachten Linie (14) von dem Abschnitt (16) minimalen Abstands ausgehend zunehmen.

2. Befestigungsmittel (10) nach Anspruch 1, **dadurch gekennzeichnet, dass** die Schenkel (Xa, Xb) der Halteelemente (12a, 12b) derart ausgebildet sind, dass zwischen ihnen ein erster und ein zweiter Bereich (20, 22) gebildet sind, die sich zu dem Abschnitt (16) minimalen Abstands hin verjüngen.

3. Befestigungsmittel (10) nach Anspruch 1 oder 2, **dadurch gekennzeichnet, dass** die Halteelemente (12a, 12b) entlang der gedachten geraden Linie (14) spiegelsymmetrisch angeordnet sind.

4. Befestigungsmittel (10) nach Anspruch 2 oder 3, **dadurch gekennzeichnet, dass** sich die Bereiche (20, 22) zwischen den Schenkeln (Xa, Xb) linear zu dem Abschnitt (16) minimalen Abstands hin verjüngen.

5. Befestigungsmittel (10) nach einem der vorhergehenden Ansprüche 2 bis 4, **dadurch gekennzeichnet, dass** sich der erste Bereich (20) zwischen den Schenkeln (Xa, Xb) derart zu dem Abschnitt (16) minimalen Abstands hin verjüngt, dass die den ersten Bereich (20) bildenden Teile der Schenkel (Xa, Xb) einen Einführungsbereich zum Einführen eines Stegs (38), der zwischen zwei Montageschlitzen (34) der Montageplatte (32) ausgebildet ist, bilden.

6. Befestigungsmittel (10) nach Anspruch 5, **dadurch gekennzeichnet, dass** die den ersten Bereich (20) bildenden Teile der Schenkel (Xa, Xb) in einen Winkel (α) von kleiner 50°, zueinander angeordnet sind.

7. Befestigungsmittel (10) nach einem der vorhergehenden Ansprüche 2 bis 6, **dadurch gekennzeichnet, dass** sich der zweite Bereich (22) zwischen den Schenkeln (Xa, Xb) derart zu dem Abschnitt (16) minimalen Abstands hin verjüngt, dass die den zweiten Bereich (22) bildenden Teile der Schenkel (Xa, Xb) einen Arbeitsbereich zum Halten eines/des Stegs (38), der zwischen zwei Montageschlitzen (34) der Montageplatte (32) ausgebildet ist, bilden.

8. Befestigungsmittel (10) nach Anspruch 7, **dadurch gekennzeichnet, dass** die den zweiten Bereich (22) bildenden Teile der Schenkel (Xa, Xb) bei einer maximalen elastischen Verformung der Halteelemente (12a, 12b) voneinander, aufgrund der Durchführung des Stegs (38) der Montageplatte (32) durch den Abschnitt (16) minimalen Abstands, einen Winkel (γ) von mindestens 20° zueinander aufweisen.

9. Befestigungsmittel (10) nach einem der vorhergehenden Ansprüche, **dadurch gekennzeichnet, dass** die Schenkel (Xa, Xb) in dem Abschnitt (16) minimalen Abstands einen Spalt (18) zwischen sich bilden.

10. Befestigungsmittel (10) nach einem der Ansprüche 1 bis 8, **dadurch gekennzeichnet, dass** sich die Schenkel (Xa, Xb) in dem Abschnitt (16) minimalen Abstands berühren.

11. Befestigungsmittel (10) nach einem der vorhergehenden Ansprüche, **dadurch gekennzeichnet, dass** die Schenkel (Xa, Xb) der Haltelemente (12a, 12b) innere Schenkel (Xa1, Xb1) und äußere Schenkel (Xa2, Xb2) aufweisen, die miteinander verbunden sind, wobei die inneren Schenkel (Xa1, Xb1) der zwei Haltelemente (12a, 12b) einander zugewandt sind.

12. Befestigungsmittel (10) nach Anspruch 11, **dadurch gekennzeichnet, dass** die inneren (Xa1, Xb1) und die äußeren Schenkel (Xa2, Xb2) eines jeden Halteelementes (12a, 12b) im Bereich ihres Übergangs einen Winkel von 20° bis 60°, insbesondere von 40° bis 50°, zwischen sich bilden.

13. Befestigungsmittel (10) nach Anspruch 11 oder 12, **dadurch gekennzeichnet, dass** die äußeren Schenkel (Xa2, Xb2) eines jeden Halteelementes (12a, 12b) so ausgebildet sind, dass sie ein gebogenes, freies Ende aufweisen und im Bereich der Biegung ein Winkel größer 90° gebildet ist.

14. Befestigungsmittel (10) nach einem der Ansprüche 11 bis 13, **dadurch gekennzeichnet, dass** die inneren (Xa1, Xb1) und die äußeren Schenkel (Xa2, Xb2) eines jeden Halteelementes (12a, 12b) so zueinander ausgebildet sind, dass die Haltelemente (12a, 12b) in einer Seitenansicht jeweils eine im Wesentlichen D-förmige Kontur aufweisen.

15. Befestigungsmittel (10) nach einem der Ansprüche 11 bis 14, **dadurch gekennzeichnet, dass** die inneren Schenkel (Xa1, Xb1) eines jeden Halteelementes (12a, 12b) an ihren den jeweiligen äußeren Schenkeln (Xa2, Xb2) abgewandten Enden in einer Richtung senkrecht zu der Ebene der Haltelemente (12a, 12b) um 180° derart gebogen sind, dass sie ein Bogenelement (24) bilden, das die beiden inneren Schenkel (Xa1, Xb1) miteinander verbindet.

16. Befestigungsmittel (10) nach Anspruch 15, **dadurch gekennzeichnet, dass** der minimale Innenradius des Bogenelements (24) zumindest dem dreifachen Durchmesser der Schenkel (Xa, Xb) der Halteelemente (12a, 12b) des Befestigungsmittels entspricht.

17. Befestigungsmittel (10) nach einem der vorhergehenden Ansprüche, **dadurch gekennzeichnet, dass** das Befestigungsmittel (10) einstückig, insbesondere monolithisch, ausgebildet ist.

18. Befestigungsmittel (10) nach einem der vorhergehenden Ansprüche, **dadurch gekennzeichnet, dass** das Befestigungsmittel (10) aus einem Metalldraht ausgebildet ist.

19. Befestigungsmittel (10) nach einem der vorhergehenden Ansprüche, **dadurch gekennzeichnet, dass** das Befestigungsmittel (10) Befestigungselemente zum kraft- und/oder stoffschlüssigen Befestigen an dem Rahmenelement (28) aufweist.

20. Befestigungsmittel (10) nach einem der vorhergehenden Ansprüche, **dadurch gekennzeichnet, dass** das Befestigungsmittel (10) durch Heißverstemmen mit dem Rahmenelement (28) verbindbar ist.

21. Rahmenelement (28) einer Installationseinrichtung (30), insbesondere Schalter, Taster oder Raumtemperaturregler, mit wenigstens einem daran angebrachten Befestigungsmittel (10) nach einem der vorhergehenden Ansprüche.

22. Rahmenelement (28) nach Anspruch 21, **dadurch gekennzeichnet, dass** das Rahmenelement (28) zur Aufnahme einer Installationseinrichtung (30) ausgebildet ist, welche im befestigten Zustand des Rahmenelementes (28) an der Montageplatte (32) einer Elektroinstallation (50) mit der Elektroinstallation (50) elektrisch verbindbar ist.

23. Rahmenelement (28) nach Anspruch 21 oder 22, **dadurch gekennzeichnet, dass** an dem Rahmenelement (28) ein Zwischenelement (40), insbesondere eine Zwischenplatte, angeordnet ist, die als Distanzelement zwischen dem Rahmenelement (28) und der Elektroinstallation (50) dient.

24. Installationseinrichtung (30) aufweisend ein Rahmenelement (28) zur Befestigung der Installationseinrichtung (30) an einer Montageplatte (32) einer Elektroinstallation (50), **dadurch gekennzeichnet, dass** das Rahmenelement (28) gemäß einem der vorhergehenden Ansprüche 21 bis 23 ausgebildet ist.
